# EUROPEAN PATENT SPECIFICATION

(11) **EP 0 967 672 B1**
(45) Date of publication and mention of the grant of the patent: **29.06.2005**
(21) Application number: 98917623.5
(22) Date of filing: 22.04.1998
(51) Int. Cl.: H01M 4/02, H01M 4/04, H01M 10/40, H01M 6/00, H01M 10/00

(54) **ELECTRODE AND BATTERY**
ELEKTRODE UND BATTERIE
ELECTRODE ET BATTERIE

(30) Priority: 23.04.1997 JP 10505197
(43) Date of publication of application: 29.12.1999
(73) Proprietor: Japan Storage Battery Co., Ltd., Kyoto-shi, Kyoto 601 (JP); MITSUBISHI DENKI KABUSHIKI KAISHA, Chiyoda-ku Tokyo-to, 100 (JP)
(72) Inventor: ARIMA, Yoichiro-Japan Storage Battery Co., Ltd., Minami-ku, Kyoto-shi,Kyoto-fu 601-8520 (JP); TSUKAMOTO, Hisashi-Japan Storage Battery Co., Ltd., Minami-ku, Kyoto-shi,Kyoto-fu 601-8520 (JP); AIHARA, Shigeru-Mitsubishi Denki Kabushiki Kaisha, Chiyoda-ku,Tokyo 100-0005 (JP); TAKEMURA, Daigo-Mitsubishi Denki Kabushiki Kaisha, Chiyoda-ku,Tokyo 100-0005 (JP); SHIOTA, Hisashi-Mitsubishi Denki Kabushiki Kaisha, Chiyoda-ku,Tokyo 100-0005 (JP); URUSHIBATA, Hiroaki-Mitsubishi Denki Kabushiki K., Chiyoda-ku,Tokyo 100-0005 (JP); ARAGANE, Jun-Mitsubishi Denki Kabushiki Kaisha, Chiyoda-ku,Tokyo 100-0005 (JP); YOSHIOKA, Shoji-Mitsubishi Denki Kabushiki Kaisha, Chiyoda-ku,Tokyo 100-0005 (JP); KISE, Makiko-Mitsubishi Denki Kabushiki Kaisha, Chiyoda-ku,Tokyo 100-0005 (JP)
(74) Representative: GROSSE BOCKHORNI SCHUMACHER
(86) International application number: PCT/JP1998/001844
(87) International publication number: WO 1998/048466

(56) References cited:
- JP-A- 7 166 211
- JP-A- 7 272 760
- JP-A- 7 320 788
- JP-A- 8 096 795
- JP-A- 8 153 515
- JP-A- 9 298 057
- JP-A- 9 330 704
- JP-A- 10 172 537

## Description

### Technical Field

The invention relates to an electrode and a cell having a power generating element in which positive and negative electrodes are alternately closely arranged via electrolyte retaining layers for retaining an electrolyte, such as separators.

### Background Art

A cell (a chemical cell of the active material retaining type and including a primary cell and a secondary cell) comprises usually power generating elements in each of which positive and negative electrodes are closely arranged via separators. A separator is an insulator which is used for separating such positive and negative electrodes from each other, and which can be impregnated with an electrolyte solution. In a cell of the wound type, for example, a positive electrode and a negative electrode each of which consists of a single strip are wound via two strip separators, thereby forming a power generating element. In a layer built cell, plural positive and negative electrodes having a thin plate-like shape are stacked via plural sheet separators, thereby forming a power generating element. A power generating element which is wound or stacked as described above is provisionally fastened with a tape or the like and the power generating element is housed and pressed in a tough cell container consisting of a metal can or the like in order to prevent the electrodes and the separators from being separated from each other to change the inter-electrode distance, or the overlapping of the electrodes and the separators from being misaligned.

In a power generating element of a cell of the prior art, however, electrodes and separators are closely contacted with one other by the tape fastening, the pressurizing by using a cell container, and the like so as to form a substantially gapless state. Therefore, there is a problem in that, even when an electrolyte solution is poured into a cell container, permeation of the electrolyte solution gradually advances with starting from edge portions of the separators which are exposed from the surface of the power generating element, and a prolonged time period is required for sufficiently dispersing the electrolyte solution into a center portion of the power generating element. This problem is produced in both a primary cell and a secondary cell, or commonly arises in all kinds of cells, including cells of the wound type and the layer built type. Particularly, the problem is noticeable in a cell having a large electrode area.

A technique has been proposed in which, in a cell which does not substantially generate a gas between electrodes during a charging process, such as a non-aqueous electrolyte secondary cell, positive and negative electrodes are fixed to separators interposed among the electrodes, thereby integrating a power generating element. In the case where a power generating element is integrated, even when the power generating element is not pressed by fastening with a tape or the like nor by housing in a cell container or the like, there is no fear that the inter-electrode distance is changed or the overlapping of the electrodes and the separators is misaligned. Therefore, such a power generating element can be housed in a flexible sheet-like cell container.

When a power generating element is integrated as described above, however, electrodes and separators are completely closely contacted with one other so as to form a perfect gapless state. In a non-aqueous electrolyte secondary cell, a microporous plastic film is usually used as a separator. As compared with a separator configured by non-woven fabric or the like, therefore, the penetration rate of the electrolyte solution is lowered. In such a case, therefore, there arises a problem in that the diffusion rate of the electrolyte solution is lower than that in a usual cell.

In some non-aqueous electrolyte secondary cells, a gas is generated between electrodes, only in an initial charging process. Consequently, a work of extracting the generated gas may be sometimes conducted by evacuating a cell container in which a power generating element is housed, poring an electrolyte solution into the container, performing a preliminary charging process, and then again evacuating the container. In such evacuating processes, therefore, there arises also a problem in that the gas extraction from a power generating element is inferiorly performed.

In such a cell, furthermore, a separator and an electrode interface are bonded to each other by an adhesive agent containing a solvent, and hence a step of removing the solvent contained in the adhesive agent is required in the production of the cell. In this step, heat drying, vacuum drying, vacuum heat drying, or the like is used, and therefore there is a problem in that a prolonged time period is required for removing a solvent.

In a cell in which electrodes and separators are disposed in close proximity to one another, it is seemed that an electrolyte solution is impregnated through a section of each separator, and hence there is a problem in that a prolonged time period is required even when a technique such as vacuum impregnation is used.

The invention has been conducted in view of such circumstances. It is an object of the invention to provide an electrode in which a groove is formed in a face of the electrode, whereby diffusion of a poured electrolyte solution into a power generating element, gas extraction from the power generating element, and the rate of removing a solvent can be improved, and also a cell using such an electrode.

### Disclosure of Invention

In order to solve the problems, (1) the invention is characterized in that, in a power generating element in which one or more positive electrodes and one or more negative electrodes are alternately closely arranged via electrolyte retaining layers for retaining an electrolyte, such as separators, a groove is formed in an opposed face of at least one of the electrodes, the opposed face being opposed to the other electrode via an electrolyte retaining layer, at least one end of the groove reaching an end portion of the electrode Furthermore, the electrolyte retaining layer is a micropourous plastic film. According to means (1), a groove is formed in an opposed face of at least one of the electrodes. Therefore, a poured electrolyte solution permeates not only into the electrolyte retaining layer through a side face of the power generating element, but also directly into the power generating element through the groove, so that the electrolyte solution can permeate therethrough into the electrolyte retaining layer and the active material of the electrode. As a result, the diffusion rate of the electrolyte solution is improved.

Furthermore, (2) in an electrode for a cell having a power generating element in which one or more positive electrodes and one or more negative electrodes are alternately closely arranged via electrolyte retaining layers, a groove may be formed in a surface of at least one of the electrodes, the surface being opposed to the other electrode via an electrolyte retaining layer, at least one end of the groove reaching an end portion of the electrode.

Furthermore, (3) the groove of (1) or (2) above may have a portion of a depth of 10 µm or more.

Alternatively, (4) in the electrode of means (1) or (3) above, a sectional area of the formed groove may not be smaller than 0.2% and not larger than 10% of a total sectional area of a mixture layer in which the groove is formed.

Alternatively, (5) in the electrode in means (1) or (4) above, the formed groove may be linear.

Alternatively, (6) in the electrode in means (1) or (5) above, the formed groove in the electrode is configured by at least two groove groups of a groove group consisting of a series of grooves which are directed in one direction in an electrode face, and a groove group consisting of a series of grooves which are directed in a direction different from the above direction.

Alternatively, (7) a cell is characterized in that it comprises the electrodes of one of means (1) to (6) above.

Alternatively, (8) in a cell configured by a positive electrode, a negative electrode, and an electrolyte retaining layer, at least one of interfaces each formed by two of the positive electrode, the negative electrode, and the electrolyte retaining layer is bonded by an adhesive layer containing fine particles, and at least one of the positive and negative electrodes has the groove of means (2) to (6) above.

Alternatively, (9) the positive and negative electrodes of the cell of one of means (2) to (8) above are fixed by the electrolyte retaining layer interposed between the electrodes. According to means (9), in the case of a non-aqueous electrolyte secondary cell or the like, the electrodes are fixed to the electrolyte retaining layer, whereby diffusion of an electrolyte solution and gas extraction are prevented from being further impaired. In some non-aqueous electrolyte secondary cells, the positive electrode must be opposed to the negative electrode. In this case, it is preferable to form a groove, only in an opposed face of the positive electrode.

Furthermore, (10) a power generating element of one of the cells of (7) to (9) above is housed in a cell container in which a laminate sheet of a metal and a plastic is a component. According to means (10), when the electrodes are fixed to the electrolyte retaining layer and the power generating element is integrated, there arises no fear that, even when the power generating element is housed in a flexible sheet-like cell container, the inter-electrode distance is changed or the overlapping of the electrodes and the separator is misaligned. Therefore, the cell container can be formed as a container which is thin, light, and economical.

In a cell of the prior art, the groove shape and the number of grooves in the face of the active material, and the like which are optimum from the viewpoint of the evaporation rate are not known. For the groove shape, the number of grooves, and the like, therefore, influence on the drying time has been studied. As a result, the shape, the number of grooves, and the like which are preferable are revealed, and the drying time can be shortened by the means described above. It has been confirmed that a groove produced by such means can function also as a groove for impregnation with an electrolyte solution.

The means described above correspond to a cell including a production step of evaporating a solvent or that of impregnating with (pouring) an electrolyte solution because of the above-mentioned reason, and is effective particularly in a cell of the bond type as described above. In the view points of drying of cell members and pouring of an electrolyte solution, the means are effective also in a cell of another type. Irrespective of whether bonding is conducted or not, the means can be applied to: an organic electrolyte solution lithium ion cell, a solid electrolyte lithium ion cell, a gel electrolyte lithium ion cell, and other lithium cells which are non-aqueous electrolyte cells; primary and secondary cells which uses an aqueous electrolyte solution; etc.

### Brief Description of Drawings

Fig. 1 is a perspective view showing one embodiment of the invention, and showing one positive electrode and separators which are to be placed on and below the electrode;
Fig. 2 is a perspective view showing the one embodiment of the invention, and showing the one positive electrode onto upper and lower faces of which the separators are fixed;
Fig. 3 is a perspective view showing the one embodiment of the invention, and of a non-aqueous electrolyte secondary cell in which a power generating element is sealed by an aluminum laminate sheet;
Fig. 4 is a longitudinal section view showing the one embodiment of the invention, and showing the structure of a power generating element of the non-aqueous electrolyte secondary cell;
Fig. 5 is a section view showing Example 1 of the invention, and of an electrode which has undergone a grooving work;
Fig. 6 is a section view showing Example 1 of the invention, and of an electrode which has undergone a grooving work at slightly shifted positions;
Fig. 7 is a plan view showing Example 2 of the invention, and of a groove pattern for a grooving work;
Fig. 8 is a view showing Example 2 of the invention, and showing relationships between the drying time in production of a cell and the discharge capacity in the case where a positive active material layer having a predetermined thickness on one face was formed on each of the faces of a positive collector plate and the widths of grooves formed in the surface were changed;
Fig. 9 is a view showing Example 2 of the invention, and showing a result of a study on the depth of a groove formed in the surface of the positive active material layer, with respect to the drying time and the discharge capacity;
Fig. 10 is a view showing Example 2 of the invention, and showing influence of the depth of a groove formed in the surface of the active material layer, on the drying time and the discharge capacity;
Fig. 11 is a plan view showing Example 3 of the invention, and showing a groove pattern of an electrode which has undergone a grooving work;
Fig. 12 is a plan view showing Example 4 of the invention, and showing a groove pattern of an electrode which has undergone a grooving work; and
Fig. 13 is a plan view showing Example 4 of the invention, and showing a groove pattern of an electrode which has undergone a grooving work.

### Best Mode for Carrying Out the Invention

Hereinafter, an embodiment of the invention will be described with reference to the drawings, and with focusing on a lithium ion cell which is currently intensively developed mainly for a portable apparatus. The invention can be applied both of positive and negative electrodes. An embodiment of the invention showing an example in which one of positive and negative electrodes is used can be applied also to the other electrode. An example in which a separator is used as an electrolyte retaining layer will be described. An electrolyte retaining layer may be configured by a porous material consisting of fine particles of magnesium oxide, silicon dioxide, aluminum nitride, or the like.

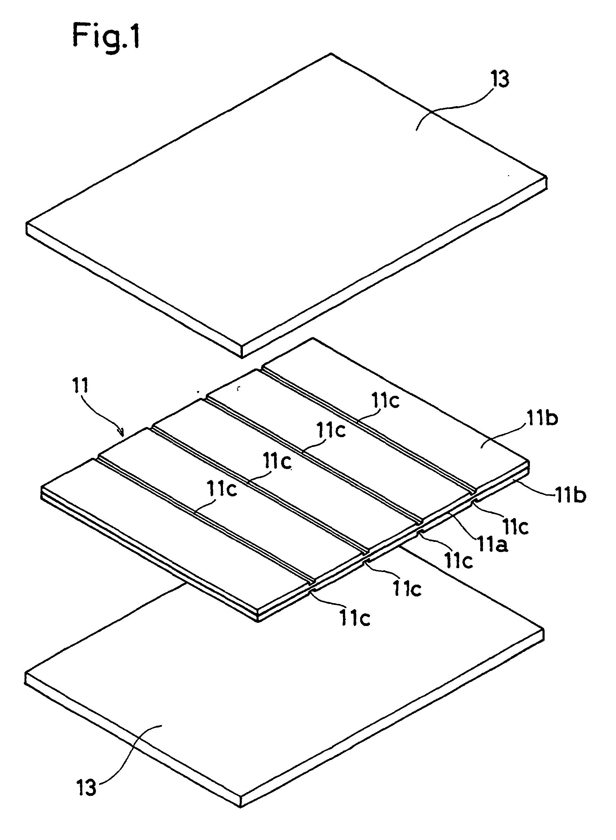

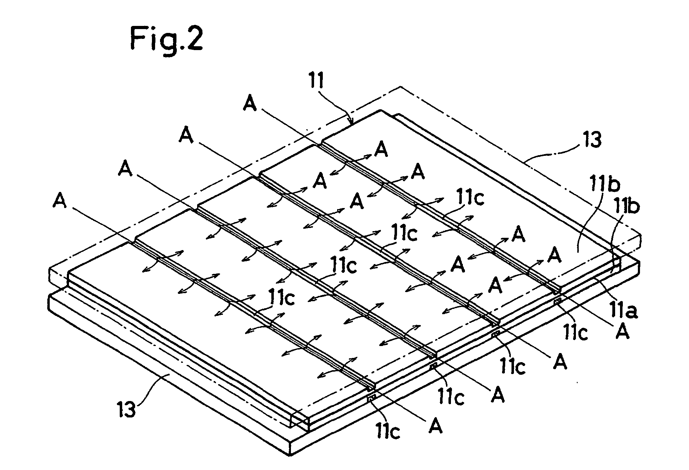

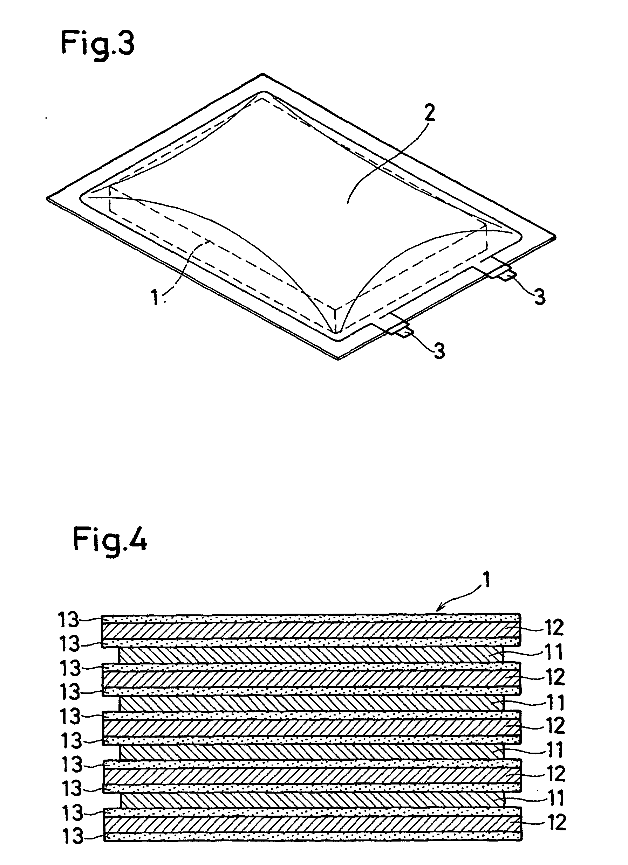

Figs. 1 to 4 show an embodiment of the invention. Fig. 1 is a perspective view showing one positive electrode and separators which are to be placed on and below the electrode, Fig. 2 is a perspective view showing the one positive electrode onto upper and lower surfaces of which the separators are fixed, Fig. 3 is a perspective view of a non-aqueous electrolyte secondary cell in which a power generating element is sealed by an aluminum laminate sheet, and Fig. 4 is a longitudinal section view showing the structure of the power generating element of the non-aqueous electrolyte secondary cell.

In the embodiment, a non-aqueous electrolyte secondary cell in which a power generating element 1 of the layer built type is sealed by covering it with an aluminum laminate sheet 2 as shown in Fig. 3 will be described. As shown in Fig. 4, the power generating element 1 is configured by stacking positive electrodes 11, negative electrodes 12, and separators 13 which are plural and square. In this case, the positive and negative electrodes 11 and 12 are alternately arranged one by one, and the separators 13 are respectively interposed between the positive and negative electrodes 11 and 12. In the non-aqueous electrolyte secondary cell of the embodiment, the positive electrodes 11 must be opposed to the corresponding negative electrodes 12. Therefore, the positive electrodes 11 are formed so as to be slightly smaller in size than the negative electrodes 12, and the upper and lower end electrodes of the stacked structure are the negative electrodes 12. In order to ensure insulation, the separators 13 are formed so as to be equal in size to the negative electrodes 12, and disposed also above and below the negative electrodes 12 at the upper and lower ends of the stacked structure. The positive electrodes 11, the negative electrodes 12, and the separators 13 are fixed to one another at adjacent opposed faces so as to integrate the power generating element 1.

As shown in Fig. 1, the positive electrode 11 is a square thin plate in which a positive active material layer (positive mixture layer) 11b such as a lithium cobalt complex oxide is applied to upper and lower faces of a positive collector plate 11a configured by an electrically conductive metal plate or the like, and then dried so as to be carried thereon. In the upper and lower faces of the positive electrode 11, plural linear grooves 11c which reaches both the edges of the square are formed in parallel and at equal intervals. The grooves 11c are formed by slightly denting the surfaces of the positive active material layers 11b. For example, the positive active material layer 11b of a thickness of 140 µm is formed on each of the upper and lower faces of the positive collector plate 11a, and the layers are linearly roll-pressed from the upper and lower sides, thereby pressing the pressed portion to a thickness of about 100 µm. As a result, the grooves 11c of a depth of about 40 µm are formed at the same positions of the upper and lower faces. Alternatively, the grooves 11c may be formed by controlling the thickness during a process of applying the positive active material layers 11b. In the case where the positive collector plate 11a serving as a substrate for carrying the positive active material layers 11b has a thickness of a certain degree, the grooves may be formed by previously forming dents in the positive collector plate. The grooves 11c are not required to be linear as far as at least one end of each groove reaches an end portion of the positive electrode 11. In place of forming plural grooves in parallel, grooves may be longitudinally and latitudinally formed in a lattice-like shape, or radially formed.

The separator 13 is a square sheet of a microporous plastic film or the like. As described above, the separator is slightly larger in size than the positive electrode 11. As shown in Fig. 2, an adhesive agent such as PVDF is applied to the upper and lower faces of the positive electrode 11, and the separators are then bonded to the positive electrode, whereby the separators are fixed to the positive electrode. The negative electrode 12 shown in Fig. 4 is a square thin plate in which a negative active material mixture having a host material such as graphite that can intercalate and deintercalate lithium ions, and a binding agent is applied to an negative collector plate. Although not shown in Figs. 1 and 2, the separators 13 are similarly fixed to both the faces of the negative electrode 12, so that the positive electrodes 11 and the negative electrodes 12 are alternately stacked via the separators 13 as shown in Fig. 4.

As shown in Fig. 3, the power generating element 1 is covered by the aluminum laminate sheet 2 having barrier properties, and the periphery except a portion is first sealed. In this case, the sealing is surely conducted under the state where tip ends of leads 3 which are respectively connected to the positive and negative electrodes 11 and 12 of the power generating element 1 are protruded from gaps between the laminated aluminum laminate sheet 2. Next, evacuation is conducted by, for example, placing the aluminum laminate sheet 2 in a chamber, whereby air is extracted from the interior of the power generating element 1. A non-aqueous electrolyte solution is poured into the aluminum laminate sheet 2. Then, a preliminary charging process is performed via the leads 3, so that gas is generated between the electrodes 11 and 12. Thereafter, evacuation is again conducted so as to extract the gas. The aluminum laminate sheet 2 is then completely sealed to hermetically seal the interior, thereby completing the non-aqueous electrolyte secondary cell. In the non-aqueous electrolyte secondary cell of the embodiment, the positive electrodes 11, the negative electrodes 12, and the separators 13 are fixed to one another to integrate the power generating element 1. Even when the power generating element 1 is not pressed by fastening with a tape or the like or housing in a cell container or the like, therefore, it is possible to eliminate a fear that the inter-electrode distance between the electrodes 11 and 12 is changed or the overlapping of the electrodes 11 and 12 and the separators 13 is misaligned. As a result, the power generating element can be housed in the flexible aluminum laminate sheet 2. In the non-aqueous electrolyte secondary cell of the embodiment, a gas is generated between the positive and negative electrodes 11 and 12, only in an initial charging process. Consequently, a preliminary charging process must be performed before the aluminum laminate sheet 2 is completely sealed, so as to previously extract the gas. The non-aqueous electrolyte secondary cell may be housed in a card type outer case so as to be used as a secondary cell of the card type. In Figs. 1, 2, and 4, in order to facilitate the understanding of the configuration of the power generating element 1, the positive electrodes 11, the negative electrodes 12, and the separators 13 are shown so as to have a thickness which is larger than the actual one.

In the non-aqueous electrolyte secondary cell having the above-described configuration, the electrodes 11 and 12 and the separators 13 of the power generating element 1 are fixed to one another by the adhesive agent. When a non-aqueous electrolyte solution is poured, therefore, the electrolyte solution cannot penetrate the interior of the power generating element 1 with passing between the electrodes 11 and 12 and the separators 13. Since a microporous plastic film or the like is used as the separators 13, a non-aqueous electrolyte solution hardly penetrates into the separators as compared with the case of non-woven fabric or the like. Since the plural grooves 11c are formed in the positive electrodes 11, however, a non-aqueous electrolyte solution A shown in Fig. 2 penetrates the interior through the grooves 11c which are opened in a side face of the power generating element 1, and rapidly penetrates into the positive active material layers 11b of the positive electrode 11 and the separator 13 in the surrounding, and also into the negative active material mixture layer of the negative electrode 12 which is opposed via the separator 13. Also in the evacuation process before the pouring of the non-aqueous electrolyte solution A, and in the evacuation after the preliminary charging process, the air in the power generating element 1 and the gas generated in the preliminary charging process can be rapidly extracted through the grooves 11c of the power generating element 1. Also when the positive electrode 11 and the separator 13 are bonded to each other with an adhesive agent and then dried, a solvent of the adhesive agent can rapidly evaporate through the grooves 11c.

It is seemed that, even when grooves are formed in the surface of the separator 13 in place of the positive electrode 11, the same effects can be attained. When grooves are to be formed in the separator 13, the separator 13 must be formed so as to have a thickness which is larger than a certain value. This causes the distance between the electrodes 11 and 12 to be excessively prolonged. Therefore, this configuration is not suitable for a practical use.

As described above, according to the non-aqueous electrolyte secondary cell of the embodiment, the diffusion rate of the non-aqueous electrolyte solution into the power generating element 1 is improved, and the gas extraction from the power generating element 1 can be rapidly performed. Consequently, the time for a work of pouring a non-aqueous electrolyte solution, and that of evacuation can be shortened, so that the productivity can be improved. Since the diffusion of a non-aqueous electrolyte solution, the gas extraction, and the drying of a solvent can be rapidly performed, the productivity is not lowered even when the electrodes 11 and 12 and the separators 13 are fixed to one another to integrate the power generating element 1. Consequently, the power generating element 1 can be housed in the flexible aluminum laminate sheet 2, so that the cell container can be made thin, light, and economical.

In the above embodiment, the case where the positive electrodes 11, the negative electrodes 12, and the separators 13 are fixed to one another has been described. Even when these components are not fixed to one another, almost no gap is formed among them, and hence the formation of grooves in the electrodes enables the electrolyte solution to be rapidly dispersed. In the above embodiment, the case where the power generating element 1 is housed in the flexible aluminum laminate sheet 2 has been described. The container is not restricted to this. The power generating element may be housed in another flexible sheet-like cell container, or in a tough cell container configured by a metal can or the like.

In the above embodiment, the grooves 11c are formed only in the positive electrode 11. When there arises no circumstances that the positive electrode 11 must be opposed to the negative electrode 12, the grooves may be formed also in the negative electrode 12. The grooves may be formed only in the negative electrode 12. In the above embodiment, the non-aqueous electrolyte secondary cell has been described. The invention is not restricted to this, and may be similarly executed also in a primary cell or another secondary cell. The configuration of the positive electrodes 11, the negative electrodes 12, and the separators 13 may be arbitrarily changed in accordance with the kind of the cell.

### Example 1

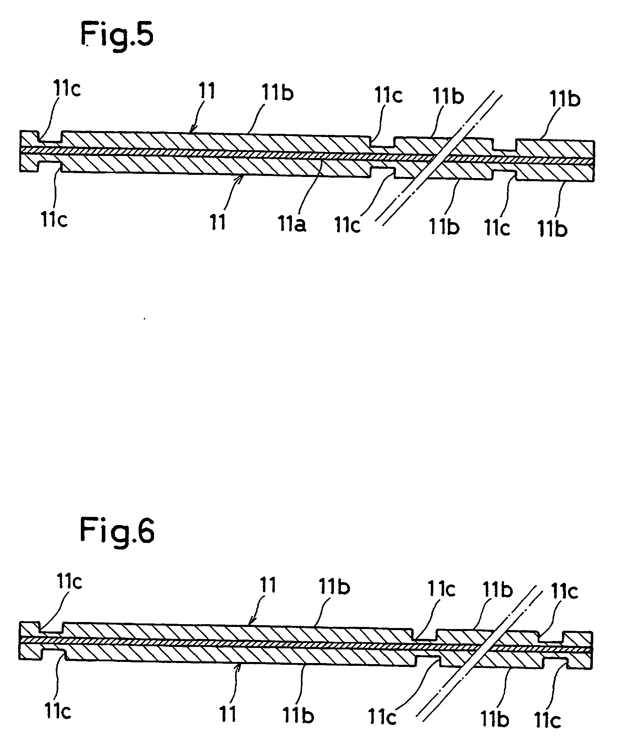

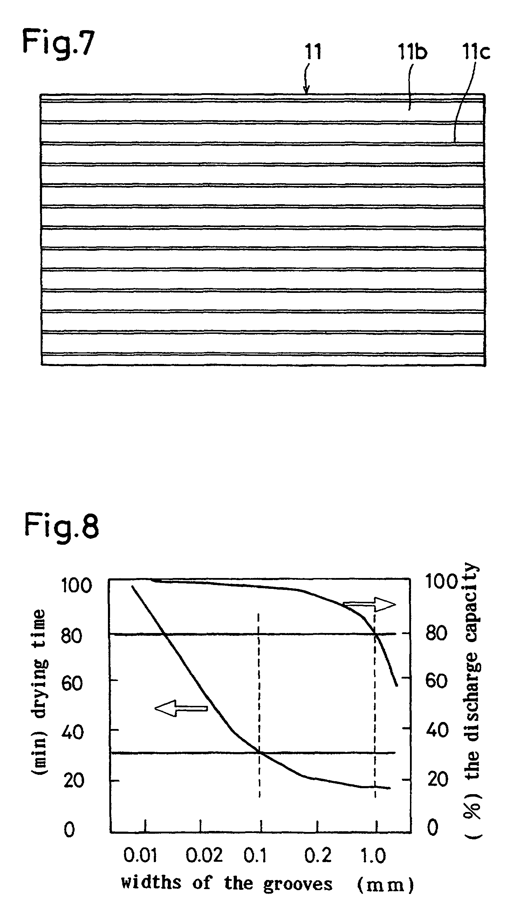

Figs. 5 and 6 show Example 1 of the invention and are section views of electrodes which have undergone a grooving work, and Fig. 7 is a plan view of a groove pattern for a grooving work in Example 2.

In the positive electrode 11, the positive active material layer (positive mixture layer) 11b having a predetermined thickness on one face is formed on each of the faces of the positive collector plate 11a configured by, for example, aluminum foil. The grooves 11c having a rectangular section shape (the section shape is not restricted to a rectangle) are formed in the surface of the positive active material layer 11b, so as to be continuous in the surface of the positive active material layer 11b from one end portion of the electrode plate 11 to the opposed end portion. The positive active material layer was formed by applying and drying a mixture which was obtained by mixing 90 wt.% of a positive active material, 4 wt.% of acetylene black as a conductive agent, and 6 wt.% of PVDF as a binding agent, and making the mixture into a pasty state by adding an appropriate amount of N-methylpyrolidone as a solvent. In the example, LiCoO₂ was used as the positive active material.

In the positive electrode 11 of Example 1, the thickness of the positive collector plate 11a was 20 µm, the thickness of each positive active material layer 11b was 90 µm, the width was 150 mm, and the length was 100 mm. In the grooves 11c, the depth was 50 µm, the width was 0.3 mm, and the center-to-center distance between the grooves was 5 mm.

The negative electrode was formed by applying a mixture to both the faces of a negative collector configured by copper foil of 10 µm, and then drying the mixture. The mixture was obtained by mixing 94 wt.% of graphite, and 6 wt.% of PVDF as a binding agent, and making the mixture into a pasty state by adding an appropriate amount of N-methylpyrolidone as a solvent. In the negative electrode, the width was 160 mm, and the length was 110 mm.

The separator is a microporous film of polyethylene and having a thickness of 25 µm, and 160 mm × 110 mm.

As shown in Fig. 6, it is not required to make the positions of the corresponding grooves in both the faces of the positive active material layer 11b coincident with each other. In the groove pattern of the grooves 11c in the surface of the electrode, as shown in Fig. 7, many grooves 11c are formed so as to elongate in parallel. As the method of forming the grooves 11c, any working method including a mechanical working such as a die working, a press working, and a laser working may be employed. In the example, the grooves 11c were formed by a press working. The positive electrode, the separator 13 made of polyethylene, and the negative electrode were bonded together in this sequence by using PVDF (polyvinylidene fluoride) which was dissolved in NMP (N-methylpyrrolidone), as an adhesive agent. After the application of the adhesive agent, the electrode member consisting of the positive electrode 11, the separator 13, and the negative electrode was placed in a vacuum dryer which was set to a temperature of 80°C, and then evacuated. The timing when the electric resistance between the electrode plates reached 100 megaohms was used as an index of the end of the drying. As compared with a similar electrode member in which the grooves 11c were not formed, the drying time for the electrode member in which the grooves 11c were formed was able to be shortened from 150 minutes to 30 minutes. As a result, the productivity of the cell production was remarkably improved.

A cell was produced in the same configuration and procedure by using, as an adhesive agent, a mixture which was obtained by mixing into a solution of PVDF dissolved into NMP, 50 to 500 weight parts (with respect to PVDF) of alumina particles of a mean particle diameter of 0.01 µm per 100 weight parts of PVDF. Also the cell attained the same result. The alumina particles constitute a filler which forms a porous adhesive layer having a thickness of about 0.1 µm to 20 µm after drying. The alumina particles may be either of secondary particles or sintered particles. The particles are not restricted to alumina. For example, magnesium oxide, aluminum nitride, silicon dioxide, or the like may be used.

### Example 2

Fig. 8 is a view showing relationships between the drying time of an electrode in production of a cell and the discharge capacity of a cell which was produced by using the electrode in the case where a positive active material layer (for example, LiCoO₂ was used as a positive active material) 11b having a predetermined thickness on one face was formed on each of the surfaces of the positive collector plate 11a and the widths of the grooves 11c formed in the surfaces of the positive active material layers 11b were changed.

In Example 2, the positive electrode 11 which was produced in Example 1 shown in Figs. 5 and 7 was used. Namely, as the positive electrode 11 an electrode was used in which the positive active material layer 11b having a thickness of 90 µm on one face was formed on both the faces of the positive collector plate 11a configured by aluminum foil and having a thickness of 20 µm, the width was 150 mm, and the length was 100 mm. For the positive electrode 11, the depth and the widths of the grooves were changed.

The grooves 11c formed in the surfaces of the positive active material layers 11b were formed so as to be continuous from one end portion of the electrode 11 to the opposed end portion in the surfaces of the positive active material layers 11b. While changing the widths of the grooves 11c, the time period required for drying and the discharge capacity were measured. As described above, any working method including a mechanical working such as a die working, a press working, or a laser working may be employed as the method of forming the grooves 11c. In the example, a layer built cell was produced by using the positive electrode 11 in which the grooves 11c were formed by a press working. The negative electrode and the separator were the same as those of Example 1. An electrode member to which a positive electrode having a lead, a separator, and a negative electrode having a lead were placed in a bag-like aluminum laminate sheet and an opening is closed by thermal fusion, thereby producing a cell. As an organic electrolyte solution, an organic electrolyte solution of EC + DEC/1 : 1 and containing 1 mol/l of LiPF₆ was used. The positive collector plate 11a, the separator 13, and the negative electrode were bonded together by using PVDF (polyvinylidene fluoride) which was dissolved in NMP (N-methylpyrrolidone), as an adhesive agent. After the application of the adhesive agent, the positive electrode 11, the separator 13, and the negative electrode which were bonded together were placed in a vacuum dryer which was set to a temperature of 80°C, and then evacuated. The drying was ended at the timing when the electric resistance between the electrode plates reached 100 megaohms.

When a test was conducted under the above-mentioned conditions, as shown in Fig. 8, the drying time tends to be prolonged when the widths of the grooves 11c are not larger than 0.1 mm, and, when the groove widths exceeded 0.8 mm, the discharge capacity was reduced. From the experimental results, it was proved that a groove width which is not smaller than 0.1 mm and not larger than 0.8 mm is preferable.

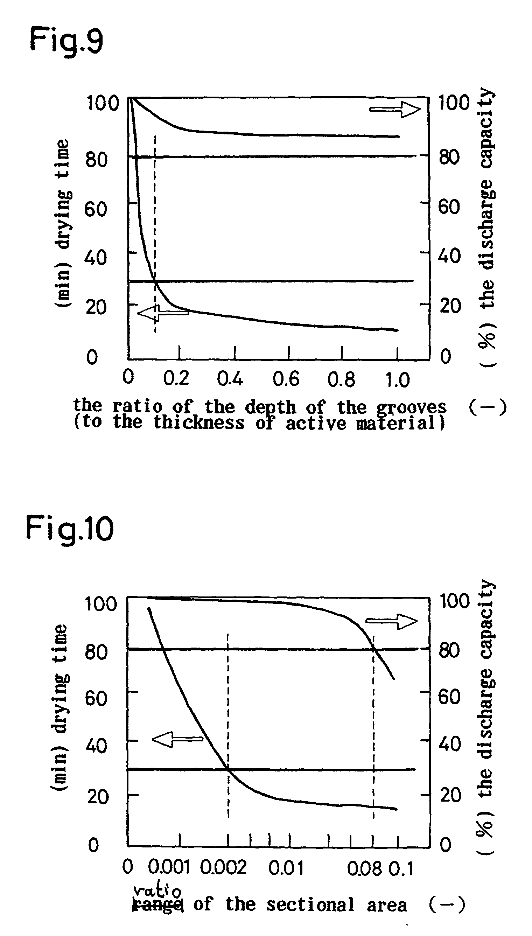

Results of studies on the effect of the depths of the grooves 11c with respect to the drying time in Example 2 are shown in Fig. 9. From Fig. 9, it was proved that a depth of 10 µm or more is effective in the drying time. Results of studies on the effect of the sectional areas of the grooves 11c with respect to the drying time are shown in Fig. 10. The sectional area is indicated as a ratio of the total area of the openings formed by the grooves 11c in a section which perpendicularly crosses the grooves 11c, to the sectional area of the active material layer. From Fig. 10, it was proved that the drying time is shorter as the sectional area is larger. Furthermore, relationships between the sectional areas of the grooves 11c and the cell properties (the charge/discharge capacity) were studied. As a result, it was revealed that the charge/discharge capacity is lower as the sectional area is larger.

From the above, it was revealed that, for conditions under which the drying time can be shortened while maintaining a charge/discharge capacity of a certain level or higher, in order to realize, for example, drying of 20 minutes or shorter while obtaining a charge/discharge capacity of 60 mAh or higher, a design is preferably conducted so that the ratio of the sectional area is 0.002 to 0.08.

### Example 3

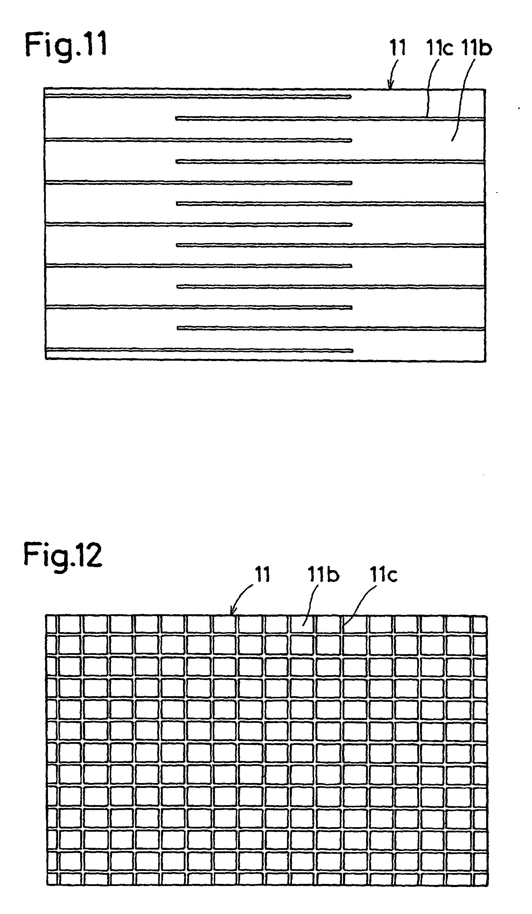

In Example 3, the positive electrode 11 is used which was produced by forming the positive active material layer 11b having a thickness of 90 µm on one face, on both the faces of the positive collector plate 11a configured by aluminum foil of a thickness of 20 µm, a width of 150 mm, a length of 100 mm, and the rectangular grooves 11c of a depth of 50 µm, and a width of 0.3 mm so as to be linear and continuous from one end portion of the electrode 11 to the opposed end portion in the surfaces of the positive active material layers 11b. As shown in Fig. 11, among the groove groups 11c, 11c, ... which are continuous, grooves adjacent to each other were formed so that the grooves reach only one of opposed end portions of the electrode and the opposite sides of the grooves are stopped halfway so as not to reach the end portions of the electrode. Plural grooves 11c are formed so that the center-to-center distance between the grooves in the surface of the electrode is 10 mm. As described above, as the method of forming the grooves 11c, any working method including a mechanical working such as a die working, a press working, and a laser working may be employed. In the example, a layer built cell was produced by using the electrode 11 in which the grooves 11c were formed by a press working. In this case, the positive electrode 11, the separator 13, and the negative electrode were bonded together by using PVDF (polyvinylidene fluoride) which was dissolved in NMP (N-methylpyrrolidone), as an adhesive agent. After the application of the adhesive agent, the positive electrode 11, the separator 13, and the negative electrode which were bonded together was placed in a vacuum dryer which was set to a temperature of 80°C, and then evacuated. The drying was ended at the timing when the electric resistance between the electrode plates reached 100 megaohms. The materials and the like of the positive electrode, the negative electrode, the separator, and the cell were the same as those of Example 1.

In Example 3, the electrode 11 in which the grooves are alternately connected to the end portions of the electrode, and the electrode 11 in which all grooves are connected to the end portions of the electrode were compared with each other with respect to drying time. The drying time of the latter electrode 11 in which all grooves are connected to the end portions of the electrode was shorter than that of the former electrode. From the view point of the drying time, the groove working method for the latter electrode 11 was superior. From the view point of the mechanical strength of the positive electrode 11 such as the bending strength, however, the former is superior to the latter, and the handling of the electrode can be improved. As a result, the productivity of the cell production was improved. In both the cases, it was proved that the drying time is shortened as compared with an electrode in which no grooves were formed, and both the methods are preferable as a groove working method.

### Example 4

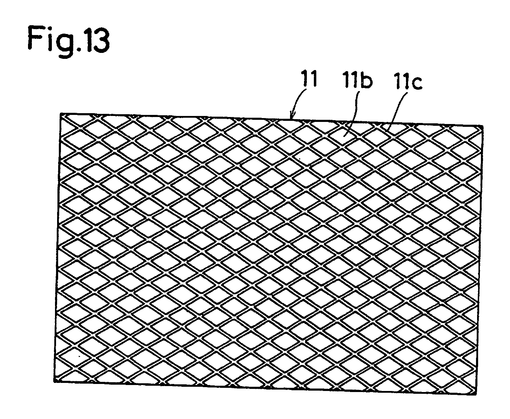

In Example 4, the positive electrode 11 is used which was produced by forming the positive active material layer 11b having a thickness of 90 µm on one face, on both the faces of the positive collector plate 11a configured by aluminum foil of a thickness of 20 µm, and the rectangular grooves 11c of a width of 150 mm, a length of 100 mm, a depth of 50 µm, and a width of 0.3 mm so as to be linear and continuous from one end portion of the electrode 11 to the opposed end portion in the surfaces of the positive active material layers 11b. Plural grooves 11c are formed so that the center-to-center distance between the grooves in the surface of the electrode is 5 mm. In the example, as shown in Fig. 12, the grooves 11c were formed so that a series of groove groups perpendicularly cross one other. Therefore, the groove groups 11c constitute lattice-like grooves on the surface of the electrode. In this case, the grooves 11c are not required to have a pattern in which grooves in two directions perpendicularly cross one other, and may have a pattern such as shown in Fig. 13. In a cell of the wound type, particularly, the pattern of Fig. 13 in which no grooves 11c that are close to an angle of 90 degrees with respect to the winding direction of the cell are formed is superior from the view point in that the electrode is prevented from being cut from the groove 11c during the winding process. As described above, as the method of forming the grooves, any working method including a mechanical working such as a die working, a press working, and a laser working may be employed. In the case of a press working, a pressing operation may be conducted plural times for grooves of different directions. Alternatively, a die roll in which the shape of grooves to be formed is engraved is previously formed, and the grooves may be formed by a single pressing operation. In Example 4, a layer built cell was produced in the same manner as Example 1 by using the positive electrode 11 in which grooves were formed by a press working. In this case, the positive electrode 11, the separators 13, and the negative electrode were bonded together by using PVDF (polyvinylidene fluoride) which was dissolved in NMP (N-methylpyrrolidone), as an adhesive agent. After the application of the adhesive agent, the positive electrode 11, the separator 13, the negative electrode 12, and the like which were bonded together were placed in a vacuum dryer which was set to a temperature of 80°C, and then evacuated. The drying was ended at the timing when the electric resistance between the electrode plates reached 100 megaohms.

According to Example 4 described above, as compared with an electrode member in which no grooves were formed, the drying time for the electrode member in which the grooves 11c were formed was able to be shortened from 150 minutes to 25 minutes. As a result, the productivity of the cell production was remarkably improved. The configurations, materials, and the like of the positive electrode, the negative electrode, the separator, and the cell were the same as those of Example 1.

### Example 5

In Example 5, the positive electrode 11 is used which was produced by forming the positive active material layer 11b having a thickness of 90 µm on one face, on both the faces of the positive collector plate 11a configured by aluminum foil of a thickness of 20 µm, and the rectangular grooves 11c of a width of 150 mm, a length of 100 mm, a depth of 50 µm, and a width of 0.3 mm so as to be linear and continuous from one end portion of the electrode 11 to the opposed end portion in the surfaces of the positive active material layers 11b. Plural grooves 11c are formed so that the center-to-center distance between the grooves in the surface of the electrode is 10 mm. The groove shape was formed so that the groove width is gradually increased as moving from the center portion of the electrode toward an end portion of the electrode. On the other hand, also the positive electrode 11 was produced in which the groove shape was formed so that the depth is gradually increased as moving from the center portion of the electrode toward an end portion of the electrode. As the method of forming the grooves 11c, any working method including a mechanical working may be employed. In Example 5, a layer built cell was produced in the same manner as Example 1 by using the positive electrode 11 in which grooves were formed by a press working. In this case, the positive electrode 11, the separators 13, and the negative electrode were bonded together by using PVDF (polyvinylidene fluoride) which was dissolved in NMP (N-methylpyrrolidone), as an adhesive agent. After the application of the adhesive agent, the positive electrode 11, the separator 13, the negative electrode 12, and the like which were bonded together were placed in a vacuum dryer which was set to a temperature of 80°C, and then evacuated. The drying was ended at the timing when the electric resistance between the electrode plates reached 100 megaohms.

According to Example 5 described above, as compared with an electrode member in which the groove width or the depth in the electrode surface is not changed, the drying time for the electrode member in which both the groove width and the depth in the electrode surface become larger as moving toward the end of the electrode was able to be shortened from 35 minutes to 28 minutes. As a result, the productivity of the cell production was improved. The configurations, materials, and the like of the positive electrode, the negative electrode, the separator, and the cell were the same as those of Example 1.

### Example 6

In Example 6, the positive electrode 11 is used which was produced by forming the positive active material layer 11b having a thickness of 90 µm on one face, on both the faces of the positive collector plate 11a configured by aluminum foil of a thickness of 20 µm, and the rectangular grooves 11c of a width of 150 mm, a length of 100 mm, a depth of 50 µm, and a width of 0.3 mm so as to be linear and continuous from one end portion of the electrode plate 11 to the opposed end portion in the surface of the positive active material 11b. Plural grooves 11c are formed so that the center-to-center distance between the grooves in the surface of the electrode is 5 mm. As described above, as the method of forming the grooves, any working method including a mechanical working such as a die working, a press working, and a laser working may be employed. In Example 6 of the invention, a linear projection pattern was produced in a stainless steel die roll having a diameter of 400 mm and a length of 400 mm, by an engraving method. The projection pattern was set to have a pitch of 5 mm, a width of 0.3 mm, and a depth of 0.05 mm. Two rolls which had undergone the working of the projection pattern were prepared. The positive electrode 11 in which the positive active material 11b was formed on both the faces of the positive collector plate 11a was passed between the two rolls, whereby the grooves 11c were simultaneously formed in both the faces of the active material layer. A layer built cell was produced in the same manner as Example 1 by using the positive electrode 11 in which the grooves 11c were formed by a groove working using the rolls. In this case, the positive electrode 11, the separators 13, and the negative electrode were bonded together by using PVDF (polyvinylidene fluoride) which was dissolved in NMP (N-methylpyrrolidone), as an adhesive agent. After the application of the adhesive agent, the positive electrode 11 and the separator 13 which were bonded together were placed in a vacuum dryer which was set to a temperature of 80°C, and then evacuated. The drying was ended at the timing when the electric resistance between the electrode plates reached 100 megaohms. It is suitable to apply a pressure of 25 to 250 kgf/cm (per the width of the electrode).

According to Example 6 described above, as compared with an electrode member in which the groove width or the depth in the electrode surface is not changed, the drying time was able to be shortened from 150 minutes to 30 minutes. As a result, the productivity of the cell production was improved. The configurations, materials, and the like of the positive electrode, the negative electrode, the separator, and the cell were the same as those of Example 1.

### Example 7

In Example 7, a cell was produced while groove working was conducted in the same manner as Example 6 except that only the depths of the projection pattern of the rolls were set to be 0.1 mm. As compared with the case of the groove depth of 0.05 mm, the depths of the grooves which were actually formed in the electrode were not largely changed. In the case of the groove width of 0.1 mm, however, the electrode in which grooves were formed had no flatness and was bent at a portion of the groove 11c. Therefore, it is seemed that the bending can be suppressed by reducing the groove depth of the rolls so as to allow the portions of the rolls other than the projections to abut against the electrode.

Although the power generating element 1 of the layer built type has been described in the embodiment and the examples described above, the invention can be similarly executed also in a power generating element of another structure, such as that of the wound type.

### Industrial Applicability

As apparent from the above description, according to the cell of the invention, a poured electrolyte solution rapidly penetrates the interior of the power generating element along the groove of the electrode. Therefore, the diffusion rate of an electrolyte solution can be improved. Also when the electrode is fixed to the separator and the power generating element is integrated, the diffusion of an electrolyte solution and the gas extraction are prevented from being impaired. This integration of the power generating element enables a flexible sheet-like cell container to be used. Therefore, a reduced thickness, a small size, and a light weight of a cell can be realized, and the invention can contribute to a reduced production cost. Since a solvent of the adhesive agent layer can be rapidly evaporated, the drying time is shortened and hence it is possible to obtain a cell of excellent productivity. Even when the groove has a shape in which the groove bottom portion has a flat portion, furthermore, the drying time can be shortened. More preferably, the length of the flat portion is at least 10% of the groove depth.

## Claims

1. A power generating element in which one or more positive electrodes and one or more electrolyte penetratable negative electrodes are alternately closely arranged via electrolyte retaining layer,
wherein a groove is formed in a face which is a surface of at least one of said electrodes, said face being opposed to the other electrode via an electrolyte retaining layer, at least one end of said groove reaching an end portion of said electrode, and said electrolyte retaining layer is a microporous plastic film.

2. The power generating element according to claim 1,
wherein said electrolyte retaining layer is separator.

3. The power generating element according to claim 1,
wherein said groove has a portion of a depth of 10 µm or more.

4. The power generating element according to claim 1,
wherein a sectional area of said formed groove is not smaller than 0.2 % and not larger than 10% of a total sectional area of a mixture layer in which said groove is formed.

5. The power generating element according to claim 1,
wherein said formed groove is linear.

6. The power generating element according to claim 1,
wherein said formed groove in said electrode is configured by at least two groove groups of a groove group consisting of a series of grooves which are directed in one direction in an electrode face, and a groove group consisting of a series of grooves which are directed in a direction different from the above direction.

7. A cell having said power generating element according to any one of claims 1 to 6.

8. A cell according to claim 7,
wherein at least one of interfaces each formed by two of said positive electrode, said negative electrode, and said electrolyte retaining layer is bonded by an adhesive layer containing fine particles.

9. A cell according to claim 7,
wherein said positive and negative electrodes are fixed by said electrolyte retaining layer interposed between said electrodes.

10. A cell according to any of claims 7 or 8,
wherein said power generating element is housed in a cell container in which a laminate sheet of metal and resin is a component.

## Patentansprüche

1. Stromerzeugungselement, bei welchem eine oder mehrere positive Elektroden und eine oder mehrere Elektrolyt-durchdringbare negative Elektroden über eine Elektrolytrückhalteschicht abwechselnd nahe beieinanderliegend angeordnet sind,
wobei eine Nut in einer Fläche ausgebildet ist, welche eine Oberfläche von mindestens einer der Elektroden ist, wobei die Fläche der anderen Elektrode über eine Elektrolytrückhalteschicht gegenüberliegt, mindestens ein Ende der Nut bis zu einem Ende der Elektrode reicht, und die Elektrolytrückhalteschicht ein mikroporöser Kunststofffilm ist.

2. Stromerzeugungselement nach Anspruch 1,
bei welchem die Elektrolytrückhalteschicht ein Separator ist.

3. Stromerzeugungselement nach Anspruch 1,
bei welchem die Nut einen Abschnitt von einer Tiefe von 10 µm oder mehr hat.

4. Stromerzeugungselement nach Anspruch 1,
bei welchem die Querschnittsfläche der ausgebildeten Nut nicht weniger als 0,2 % und nicht mehr als 10 % der Gesamtquerschnittsfläche einer Mischungsschicht beträgt, in welcher die Nut ausgebildet ist.

5. Stromerzeugungselement nach Anspruch 1,
bei welchem die ausgebildete Nut linear ist.

6. Stromerzeugungselement nach Anspruch 1,
bei welchem die in der Elektrode ausgebildete Nut durch mindestens zwei Nutgruppen von einer Nutgruppe, die aus einer Reihe von Nuten besteht, welche in einer Elektrodenfläche in einer einzigen Richtung ausgerichtet sind, und aus einer Nutgruppe konfiguriert ist, die aus einer Reihe von Nuten besteht, welche in einer sich von der zuvor erwähnten Richtung unterscheidenden Richtung ausgerichtet sind.

7. Zelle, die das Stromerzeugungselement nach einem der Ansprüche 1 bis 6 aufweist.

8. Zelle nach Anspruch 7,
bei welcher mindestens eine der Grenzflächen, die jeweils durch zwei von der positiven Elektrode, der negativen Elektrode und der Elektrolytrückhalteschicht gebildet sind, durch eine feine Partikel enthaltende Klebstoffschicht verklebt ist.

9. Zelle nach Anspruch 7,
bei welcher die positiven und negativen Elektroden durch die zwischen die Elektroden eingelegte Elektrolytrückhalteschicht befestigt sind.

10. Zelle nach Anspruch 7 oder 8, bei welcher
das Stromerzeugungselement in einem Zellenbehälter untergebracht ist, bei welchem eine übereinander geschichtete Lage aus Metall und Kunstharz ein Bestandteil ist.

## Revendications

1. Elément de génération d'énergie dans lequel une ou plusieurs électrodes positives et une ou plusieurs électrodes négatives pouvant être pénétrées par un électrolyte sont alternativement disposées de manière rapprochée via une couche de retenue d'électrolyte,
dans lequel une rainure est formée dans une face qui est une surface d'au moins une desdites électrodes, ladite face étant opposée à l'autre électrode via une couche de retenue d'électrolyte, au moins une extrémité de ladite rainure atteignant une partie d'extrémité de ladite électrode et ladite couche de retenue d'électrolyte est un film plastique micro-poreux.

2. Elément de génération d'énergie selon la revendication 1,
dans lequel ladite couche de retenue d'électrolyte est un séparateur.

3. Elément de génération d'énergie selon la revendication 1,
dans lequel ladite rainure a une partie d'une profondeur de 10 µm ou plus.

4. Elément de génération d'énergie selon la revendication 1,
dans lequel une zone transversale de ladite rainure formée n'est pas inférieure à 0,2 % et n'est pas supérieure à 10 % d'une zone transversale totale d'une couche de mélange dans laquelle ladite rainure est formée.

5. Elément de génération d'énergie selon la revendication 1,
dans lequel ladite rainure formée est linéaire.

6. Elément de génération d'énergie selon la revendication 1,
dans lequel ladite rainure formée dans ladite électrode est configurée par au moins deux groupes de rainures dont un groupe de rainures composé d'une série de rainures qui sont dirigées dans une direction d'une face d'électrode, et un groupe de rainures composé d'une série de rainures qui sont dirigées dans une direction différente de la direction ci-dessus.

7. Cellule ayant ledit élément de génération d'énergie selon l'une quelconque des revendications 1 à 6.

8. Cellule selon la revendication 7,
dans laquelle au moins une des interfaces, chacune formée de deux desdites électrodes positives, de ladite électrode négative, et de ladite couche de retenue d'électrolyte est reliée par une couche adhésive contenant de fines particules.

9. Cellule selon la revendication 7,
dans laquelle lesdites électrodes positives et négatives sont fixées par ladite couche de retenue d'électrolyte interposée entre lesdites électrodes.

10. Cellule selon l'une quelconque des revendications 7 ou 8,
dans laquelle ledit élément de génération d'énergie est contenu dans un conteneur de cellule dans lequel une feuille laminée de métal et de résine est un composant.
